Europäisches Patentamt

(19) European Patent Office

Office européen des brevets

(11) Numéro de publication: **0 127 871 B1**

(12) **FASCICULE DE BREVET EUROPEEN**

(45) Date de publication du fascicule du brevet:
**19.11.87**

(21) Numéro de dépôt: **84106110.4**

(22) Date de dépôt: **29.05.84**

(51) Int. Cl.⁴: **H 04 Q 3/52, G 02 B 6/24**

(54) **Ensemble de commutation optique spatiale.**

(30) Priorité: **31.05.83  FR 8308969**

(43) Date de publication de la demande:
**12.12.84 Bulletin 84/50**

(45) Mention de la délivrance du brevet:
**19.11.87 Bulletin 87/47**

(84) Etats contractants désignés:
**BE DE FR GB IT LU NL SE**

(56) Documents cités:
**EP - A - 0 064 751**
**DE - A - 3 012 450**
**DE - A - 3 127 574**
**FR - A - 2 331 801**
**FR - A - 2 479 993**

**PATENTS ABSTRACTS OF JAPAN, vol. 7, no. 160 (P-210)[1305], 14th July 1983**
**IEEE JOURNAL OF QUANTUM ELECTRONICS, vol. QE-17, no. 8, août 1981, pages 1539-1546, IEEE, New York, US; E.H. HARA et al.: "A high speed optoelectronic matrix switch using heterojunction switching photodiodes"**

(73) Titulaire: **ALCATEL CIT, 33, rue Emeriau, F-75015 Paris (FR)**

(72) Inventeur: **Boirat, Robert, La Bruyère Roinville, F-91410 Dourdan (FR)**
Inventeur: **Faugeras, Philippe, 11, rue de Sully, F-92100 Boulogne-Billancourt (FR)**
Inventeur: **Haux, Denis, 10, rue de Cochereau, F-91150 Etampes (FR)**
Inventeur: **Mineur, Jacques, Chemin des Barattes, F-74290 Veyrier du Lac (FR)**

(74) Mandataire: **Weinmiller, Jürgen et al, Lennéstrasse 9 Postfach 24, D-8133 Feldafing (DE)**

ACTORUM AG

## Description

La présente invention est du domaine des transmissions optiques. Elle porte plus particulièrement sur un ensemble de commutation spatiale, effectuant sélectivement des couplages entre accès d'un premier groupe de N accès de N premiers éléments optiques distincts et accès d'un second groupe de P accès de P seconds éléments optiques distincts. Cet ensemble de commutation spatiale permet, en particulier, d'assurer la diffusion de P programmes vers N abonnés et constitue alors un diffuseur optique de programmes.

D'une manière générale, dans un diffuseur optique de P programmes vers N abonnés, N fibres optiques sont affectées à la transmission de chacun des P programmes pour les N abonnés, les P fois N fibres résultantes sont regroupées en N groupes de P fibres, chacun affecté à l'un des abonnés tandis que l'une convenable des P fibres de chacun des N groupes est couplée à la fibre d'abonné concernée pour la réception par cet abonné du programme souhaité parmi les P programmes à sa disposition.

Un commutateur optique peut assurer la sélection de l'un des programmes parmi les P programmes, pour chaque abonné.

Un mode de réalisation, par voie mécanique, d'un commutateur optique permettant d'obtenir un couplage souhaité par déviation d'un faisceau de lumière est décrit dans le brevet US-A-4 304 460. Ce commutateur comporte un moyen de collimation (ou de focalisation) constitué par une lentille et un moyen de déviation constitué par un miroir tournant.

Compte tenu des très faibles dimensions des fibres optiques utilisées, ce commutateur et d'une manière générale les commutateurs opto-mécaniques à déviation de lumière sont d'encombrement important par rapport à celui des fibres et de réalisation difficile si on veut minimiser les pertes de lumière.

Un autre mode de réalisation, également par voie mécanique, d'un commutateur optique permettant d'obtenir un couplage souhaité par aiguillage d'une fibre, est donné dans l'article «La Commutation optique dans les réseaux locaux de vidéocommunication» de L. Jeunhomme, publié dans la revue technique Thomson-CSF, vol. 14, n° 3, September 1982 pages 767 à 785. Cette solution consiste à utiliser pour la diffusion de programmes, face à chaque fibre d'abonné dont l'extrémité est équipée d'une microlentille, un barillet porte-fibres constitué par un cylindre à rainures périphériques recevant les extrémités de P fibres dites fibres de programmes, également équipées de microlentilles, et à entraîner le barillet porte-fibres à l'aide d'un micromoteur afin de positionner la fibre de programme désirée face à la fibre d'abonné. Une telle réalisation conduit, dans le contexte d'application à un diffuseur optique de programmes tel qu'envisagé en particulier, dans lequel il y a autant de commutateurs que d'abonnés, à un encombrement prohibitif vis-à-vis de celui des fibres optiques.

Les documents FR-A-2 479 993 et DE-A-3 012 450 décrivent aussi des commutateurs optiques à commande mécanique. Ces commutateurs assurent un couplage direct ou un couplage croisé entre deux fibres incidentes et deux fibres émergentes. Ils comportent à cet effet un plateau intermédiaire mobile, interposé entre la paire de fibres incidentes et la paire de fibres émergentes, portant deux couples de fibres intermédiaires par lesquels sont assurés le couplage direct pour une première position du plateau et le couplage croisé pour une seconde position du plateau.

Ces commutateurs permettent la réalisation d'ensembles de commutation de type matriciel entre 2n fibres d'entrée et 2n fibres de sortie par des associations successives de commutateurs considérés comme une cellule élémentaire de commutation 2×2. Dans le contexte d'application à la diffusion de programmes, tels qu'envisagé ci-avant, ces ensembles seraient complexes, de plus ils ne permettraient pas la diffusion d'un même programme vers plusieurs abonnés, simultanément.

On connaît également par le document «Patents Abstracts of Japan, vol. 7, n° 160, 14 Juillet 1983; JP-A 5 868 702 publié le 23.04.83, un commutateur optique formé par deux empilements orthogonaux de commutateurs individuels plats. Ces deux empilements de commutateurs individuels sont identiques: ils sont chacun à N commutateurs individuels pour N fibres d'entrée, ou de sortie, selon l'empilement. Chaque commutateur individuel permet les couplages successifs de sa fibre d'entrée, ou de sortie, avec N fibres associées, par des translations relatives du support de sa fibre d'entrée ou de sortie, et du support des N fibres associées. Dans chaque commutateur individuel, sur le support des N fibres, ces N fibres s'épanouissent et ont des premières extrémités à faible pas entre elles face à la fibre d'entrée, ou de sortie, et des secondes extrémités à pas supérieur.

Dans les deux empilements, les N jeux de N fibres ont leur secondes extrémités agencées en N rangées pour l'un des empilements et en N colonnes pour l'autre. Le commutateur optique résultant permet donc de coupler une quelconque des N fibres d'entrée à une des N fibres de sortie, mais à une seule, le couplage simultané entre une fibre d'entrée et plusieurs fibres de sortie n'étant pas possible.

La présente invention a pour but de réaliser un ensemble de commutation spatiale pour assurer sélectivement des couplages entre accès d'un premier groupe et accès d'un second groupe pour la transmission optique de signaux de l'un des accès de l'un des deux groupes à l'un des accès de l'autre groupe et, en particulier, pour la diffusion optique de P programmes vers N abonnés, se présentant sous une forme particulièrement compacte, utilisant une pluralité de commutateurs se présentant sous forme d'éléments modulaires de structure intégrés possible et aisément reproductible.

La présente invention a donc pour objet un ensemble de commutation optiques spatiale entre accès d'un premier groupe de premiers éléments optiques et accès d'un second groupe de seconds éléments optiques comportant entre ces accès deux empilements orthogonaux de plaquettes optiques, dans lesquels chacune des plaquettes est affectée à l'un des premiers ou seconds éléments optiques selon l'empilement auquel appartient cette plaquette et incorpore une pluralité de guides optiques s'épanouissant depuis leurs extrémités, dites premières extrémités, destinées aux liaisons avec l'accès de l'élément optique affecté à la plaquette concernée, jusqu'à leurs secondes extrémités, et dans lesquels les secondes extrémités des guides sont agencées en rangées pour l'un des empilements et en colonnes pour l'autre des empilements pour permettre, par des translations relatives de plaquettes dans leur empilements des couplages sélectifs entre lesdits éléments optiques, l'ensemble étant caractérisé en ce que, dans l'un desdits empilements, dit de distribution optique, les premières extrémités des guides de chacune de ses plaquettes sont couplées en commun à l'accès de l'élément optique, dit second élément optique, qui est affecté à la plaquette considérée, pour que chacune des plaquettes de distribution assure une fonction de diffusion entre l'accès de se second élément optique et les secondes extrémités de ses guides alors que chacune des plaquettes appelées commutateurs de l'autre empilement, dit de sélection optique, assure une fonction de commutation entre l'accès du premier élément optique affecté à ce commutateur et les secondes extrémités de ses guides, et en ce qu'il comporte des moyens d'entraînement couplés individuellement aux seuls commutateurs, pour assurer l'entraînement individuel de chaque commutateur par rapport à l'accès du premier élément optique auquel le commutateur est affecté, pour l'obtention de ses différentes positions possibles devant l'accès de ce premier élément optique pour chacune desquelles le premier élément optique considéré est couplé sélectivement à l'un des seconds éléments optiques à travers un seul des guides de ce commutateur et un seul des guides de la plaquette de distribution affectée au second élément optique considéré.

L'invention sera décrite ci-après à l'aide des différentes figures données à titre d'exemples nullement limitatifs, dans le dessin ci-annexé. Dans ce dessin

– la figure 1 représente schématiquement un exemple préféré de réalisation d'un commutateur opto-mécanique appliqué dans l'invention,

– la figure 2 représente schématiquement une variante de réalisation de ce commutateur opto-mécanique,

– la figure 3 représente schématiquement un ensemble de commutation optique spatiale selon l'invention, notamment pour la diffusion d'une pluralité de programmes vers différents abonnés, faisant application de commutateurs conformes à celui de la figure 1,

– la figure 4 représente un mode de réalisation concrète de l'ensemble de commutation de la figure 3,

– la figure 5 est une vue partielle de dessus de l'ensemble de commutation de la figure 4 représenté partiellement coupé et partiellement arraché,

– la figure 6 représente schématiquement un agencement d'éléments de repérage de positionnement pour chaque commutateur de l'ensemble de commutation selon les figures 3 à 5,

– la figure 7 représente schématiquement l'un des éléments dit plaquette de distribution optique rentrant dans l'ensemble de commutation selon les figures 3 à 5.

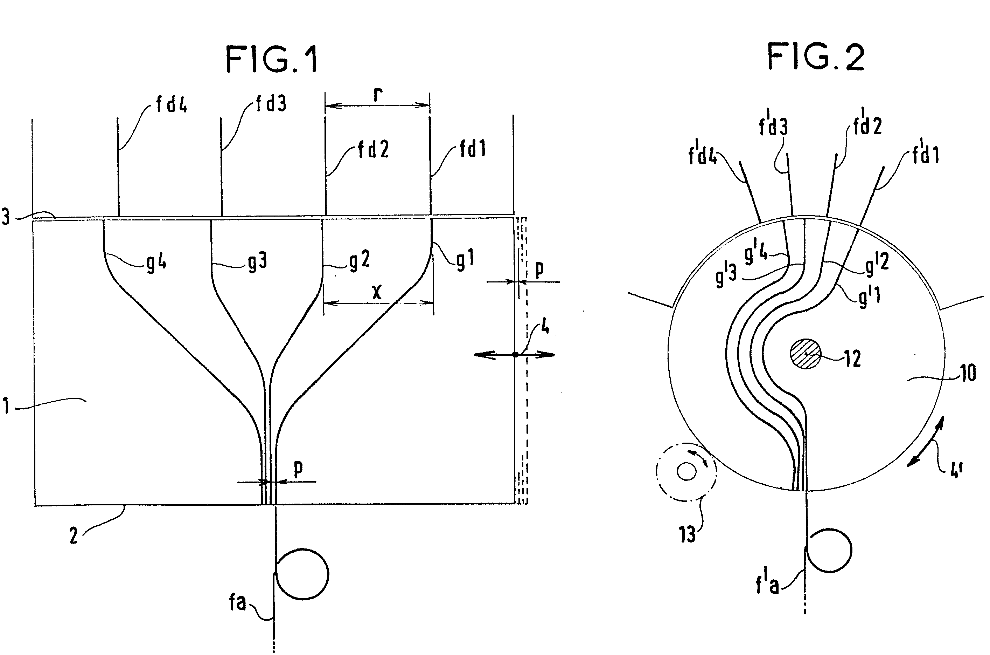

Dans la figure 1, on a illustré un exemple de réalisation d'un commutateur opto-mécanique, du type à aiguillage de fibre optique, pour le couplage sélectif entre un accès d'un premier élément optique par exemple une fibre optique fa dite fibre d'abonné et un accès d'un second élément optique parmi une pluralité de P seconds éléments optiques; dans l'exemple illustré ces seconds éléments optiques sont également des fibres optiques fd1 à fd4, dites secondes fibres optiques, et au nombre de quatre (P=4). Les accès concernés de ces secondes fibres optiques fd1 à fd4 sont agencés à pas régulier r sur une même ligne.

Le commutateur opto-mécanique interposé entre l'accès de la fibre fa et les accès des secondes fibres fd1 à fd4 est constitué par un ensemble optique rigide et plat 1, de forme rectangulaire. Cet ensemble optique 1 incorpore autant de guides d'onde individuels, soit quatre guides d'onde g1 à g4, qu'il y a des secondes fibres optiques fd1 à fd4. Dans l'ensemble optique 1, ces guides d'onde s'épanouissent en une nappe depuis un premier bord 2 de l'ensemble, où ils ont des premières extrémités sensiblement alignées et à pas régulier p, jusqu'à un second bord 3 de l'ensemble, opposé au premier, où ils ont des secondes extrémités sensiblement alignées parallèlement aux premières, avec un espacement régulier x entre elles nettement supérieur au pas p. Cet espacement x entre lesdites secondes extrémités des guides sur le bord 3, est choisi égal à l'espacement r entre les accès des secondes fibres optiques fd sur leur ligne, augmenté du pas p, l'espacement r étant également nettement supérieur au pas p.

L'ensemble optique est positionné de sorte que l'accès de la fibre fa soit en regard et à très faible distance, de l'ordre de 10 μm, de la ligne définie par les premières extrémités des guides d'onde g1 à g4 sur le premier bord 2 de l'ensemble 1 et que la ligne des accès des fibres fd1 à fd4 soit en regard et également à très faible distance, de l'ordre de 10 μm, de celle définie par les secondes extrémités des guides d'onde g1 à g4 sur le second bord 3 de l'ensemble optique 1. Il est entraîné en translation devant l'accès de la fibre optique fa, parallèlement à la direction commune des lignes des premières extrémités et des secondes extrémités des guides d'onde g1 à g4, ainsi que schématisé par la double flèche 4. Cette translation est effectuée au pas p et permet d'assurer la mise en regard simultanée des deux extrémités d'un des guides g1 à g4 avec l'accès de la fibre fa et l'accès de celle des fibres fd1 à fd4 de même rang que celui du guide considéré, respectivement, pour le couplage de ces deux accès, pour chacune des quatre positions différentes de l'ensemble optique rigide 1 devant les accès.

De cette représentation schématique donnée dans la figure 1, on comprendra aisément que les seconds éléments optiques peuvent être en nombre P, différent de quatre, sur leur ligne. L'ensemble optique comportera alors également P guides d'onde.

On précise, à titre d'exemple, que pour 16 fibres fd chacune de 40/45 µm et un ensemble optique 1 ayant 16 guides g de 45/50 µm, le pas p sera choisi par exemple de 0,2 mm, le pas r entre accès des fibres fd sera de 5 mm et le pas x de 5,2 mm. La fibre fa pourra être de diamètre extérieur de 125 µm.

En variante par rapport à la figure 1, les accès des secondes fibres fd seront toujours alignés mais ne seront plus à espacement régulier entre eux. Dans ces conditions, les secondes extrémités des guides, sur le bord 3 de l'ensemble optique, auront entre elles le même espacement xi que celui ri entre accès des fibres optiques fd de mêmes rangs, augmenté du pas p entre les premières extrémités de ces guides, ce pas p étant avantageusement conservé constant pour une commande aisée en translation au pas p de l'ensemble optique 1 devant les accès.

Dans la figure 2, on a illustré schématiquement une variante de réalisation du commutateur opto-mécanique précédent. Dans cette variante les fibres à coupler sont désignées par les références précédentes accompagnées du signe prime, ainsi que les guides d'onde individuels de l'ensemble optique de commutation qui, quant à lui, est désigné sous la référence 10.

Cet ensemble optique 10 se présente sous la forme d'une galette ayant les premières extrémités et les secondes extrémités de ses guides d'onde g'1 à g'4 disposées sur la tranche de la galette, sur deux arcs de cercle sensiblement opposés l'un à l'autre. La galette est interposée, entre l'accès de la fibre optique f'a positionnée face à l'arc défini par les premières extrémités des guides g'1 à g'4 et les accès des secondes fibres positionnées face à l'arc défini par les secondes extrémités des guides, en étant à très faible distance des accès à coupler. Les accès des secondes fibres f'd1 à f'd4 sont disposés en arc de cercle de même centre que celui défini par les secondes extrémités des guides d'onde g'1 à g'4 et de rayon très légèrement supérieur. Sur la tranche de la galette, les premières extrémités des guides sont à pas angulaire régulier et très faible, et les secondes extrémités de ces guides à pas angulaire choisi égal à celui entre les accès des secondes fibres optiques f'd de mêmes rangs diminué du pas angulaire entre les premières extrémités, le pas angulaire entre les accès des secondes fibres optiques f'd étant nettement supérieur à celui entre les premières extrémités des guides g'1 à g'4. La commutation ou couplage de l'accès de la fibre optique f'a à l'accès de l'une des secondes fibres optiques f'd1 à f'd4 s'obtiendra, ainsi que schématisé par la double flèche 4', par rotation de l'ensemble rigide, autour de l'axe central 12 de l'ensemble 10, au pas angulaire entre les premières extrémités de ses guides d'onde, cet entraînement en rotation étant assuré par un galet d'entraînement 13 couplé à l'ensemble 10, sur une portion périphérique libre de toute extrémité de guide.

Le commutateur opto-mécanique rigide et plat, de forme rectangulaire ou circulaire, avec ses guides d'onde internes, peut être avantageusement constitué par une plaque de verre dans laquelle lesdits guides d'onde sont créés par diffusion d'ions dans le verre et donc obtenu en structure intégrée, ainsi que décrit, par exemple, dans l'article intitulé «Planar multimode devices for fiber optics» de G.L. Tangonan et autres, présenté à Optical Communication Conference, Amsterdam 17–19 septembre 1979, ou dans l'article intitulé «Fast fabrication method for thick and highly multimode optical waveguides» de G.H. Chartier et autres, publié dans Electronics Letters vol. 13 n° 25 du 8 Décembre 1977.

Ce commutateur peut aussi être obtenu, par surmoulage de fibres individuelles constituant les guides d'onde dans une résine époxy chargée en silice ou par moulage de ces fibres optiques dans du verre, à point de fusion de l'ordre de 500° et à faible coefficient de dilatation minimisant les contraintes lors du refroidissement.

Outre l'avantage de réalisation possible en structure intégrée et indépendamment de sa forme rectangulaire ou circulaire, le commutateur opto-mécanique résultant constitue un concentrateur géométrique qui permet de réduire l'amplitude des déplacements à effectuer pour assurer la commutation et en conséquence d'augmenter la qualité du couplage et la fiabilité du commutateur, une faible tolérance sur un positionnement relatif d'éléments mobiles entres eux étant plus facile à tenir avec de faibles amplitudes de déplacement relatif. Ce commutateur constitue, par ailleurs, un élément modulaire qui permet la constitution aisée d'un ensemble de sélection optique par simple empilement d'éléments modulaires ou par réalisation globale en structure intégrée, pour l'utilisation d'une pluralité de tels commutateurs dans un ensemble de commutation spatiale se présentant alors sous forme très compacte.

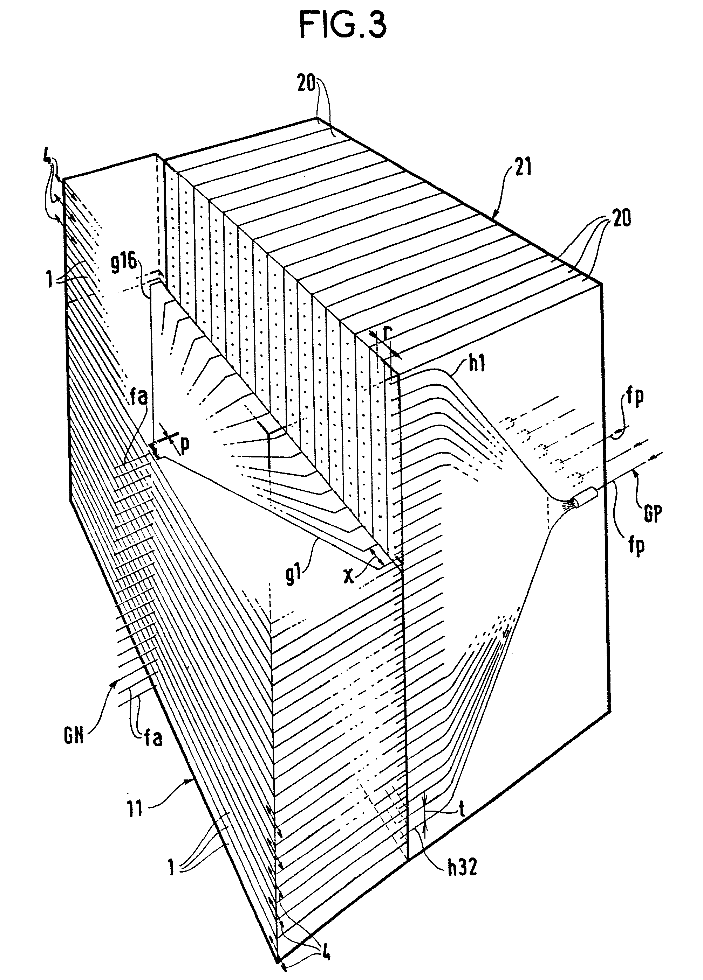

Dans la figure 3, on a illustré un ensemble de commutation optique spatiale entre accès d'un premier groupe GN de N éléments optiques distincts fa et accès d'un second groupe GP e P éléments optiques distincts fp. Cet ensemble de commutation optique spatiale comporte N commutateurs opto-mécaniques selon la figure 1, désignés individuellement par la référence 1 donnée au commutateur de la figure 1, pour les couplages sélectifs à effectuer entre les accès des N éléments optiques et ceux des P éléments optiques. Ces N commutateurs constituent un ensemble de sélection optique 11.

Cet ensemble de commutation optique spatiale est décrit dans le cadre de son application à une diffusion optique de P programmes vers N abonnés, ces P programmes étant transmis individuellement sur P fibres optiques distinctes fp tandis qu'aux N abonnés sont affectées N fibres optiques fa pouvant chacune recevoir l'un des P programmes. Il est appelé ci-après diffuseur optique de programmes. La description est aussi donnée en choisissant, à titre d'exemple, 16 programmes à diffuser vers 32 abonnés, P=16, N=32.

Le diffuseur optique comporte un premier empilement de 16 plaquettes de distribution optique de programme identiques entre elles, 20, chacune de ces plaquettes étant destinée à la distribution de l'un des 16 différents programmes vers chaque abonné. Ces 16 plaquettes de distribution constituent un ensemble de distribution optique 21. Chacune des plaquettes 20 comporte 32 guides optiques h1 à h32, dits guides de distribution de l'un des programmes. Ces 32 guides ont des premiers accès couplés en commun à l'accès de la fibre de programme fp affectée à la plaquette considérée et ont des seconds accès dits accès de sortie de ce programme débouchant d'un même côté sur la tranche de cette plaquette, sur laquelle ils sont disposés en une ligne et à pas régulier t.

Dans cet empilement de plaquettes de distribution de programme 20, les guides de distribution h1 à h32 des différentes plaquettes 20, ont leurs accès de sortie pour les différents programmes disposés d'un même côté de l'empilement. Ces 16×32 accès de sortie définissent ainsi 32 rangées, chacune de 16 accès de sortie pour les 16 différents programmes, le long de chacune desquelles les 16 accès de sortie sont agencés pour constituer 16 accès pour l'un des commutateurs opto-mécaniques 1 et sont donc entre eux au pas r indiqué dans la figure 1.

Les 32 commutateurs opto-mécaniques 1, de l'ensemble de sélection optique 11, affectés chacun à l'une des fibres fa du groupe GN, sont également montés en un second empilement dans lequel les commutateurs individuels sont disposés transversalement aux plaquettes de distribution de programme 20. Chacun de ces commutateurs opto-mécaniques comporte 16 guides d'onde individuels, désignés conformément à la figure 1 sous les références g1 à g16, Ces 16 guides d'onde ont leurs premières extrémités alignées et disposées au pas p sur leur ligne. Dans l'empilement de commutateurs les premières extrémités des guides sont d'un même côté et sont pour chaque ligne associées à l'accès de la fibre fa affectée au commutateur correspondant. Ces guides ont leurs secondes extrémités également alignées et disposées au pas x sur leur ligne et associées, pour chaque ligne, aux accès de sortie de l'une des 32 rangées de 16 accès de sortie pour les 16 programmes de l'empilement des plaquettes 20.

Dans ce diffuseur optique, le pas entre les commutateurs de l'ensemble de sélection optique 11 définira le pas, noté t, entre les accès de sortie d'un même programme sur la tranche de chacune des plaquettes de distribution 20 de l'ensemble de distribution optique 21. Par cotnre le pas entre les plaquettes 20 définira le pas r entre les accès de sortie des différents programmes disposés en ligne, donc les pas x et p entre les secondes extrémités et les premières extrémités respectivement sur chacune de leurs lignes, des guides de chacun des commutateurs.

Les commutateurs sont individuellement mobiles en translation, selon la flèche 4 devant leur ligne des 16 accès pour les 16 programmes et l'accès de leur fibre fa. Le diffuseur optique, à commutateurs ainsi mus individuellement, assure donc la diffusion vers chacun des N abonnés, de celui souhaité parmi les P programmes possibles, un même programme pouvant être transmis à plusieurs abonnés.

Dans l'exemple illustré dans la figure 3, les P seconds éléments optiques couplés aux guides des P plaquettes de distribution, respectivement, sont, ainsi qu'indiqué ci-avant, des fibres optiques. En variante, ils pourraient être des sources de lumière émettrices de programme, chaque source étant par exemple constituée d'une diode laser ou, plus avantageusement, de plusieurs diodes laser émettant le même programme, cette dernière configuration présentant notamment l'avantage, outre celui d'une plus grande fiabilité, de diminuer le bruit modal grâce à la superposition des différents modes des lasers.

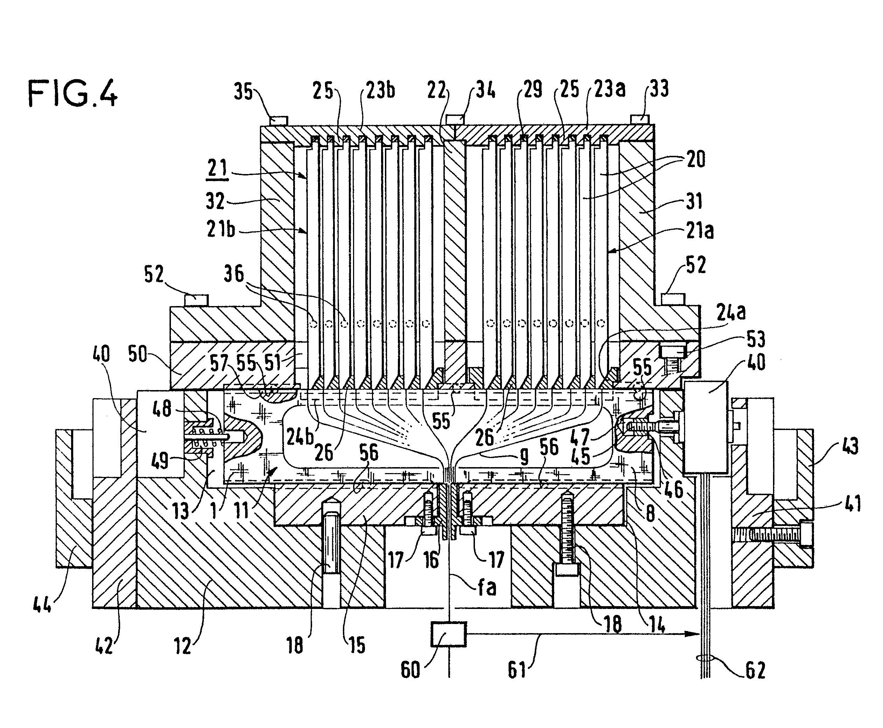

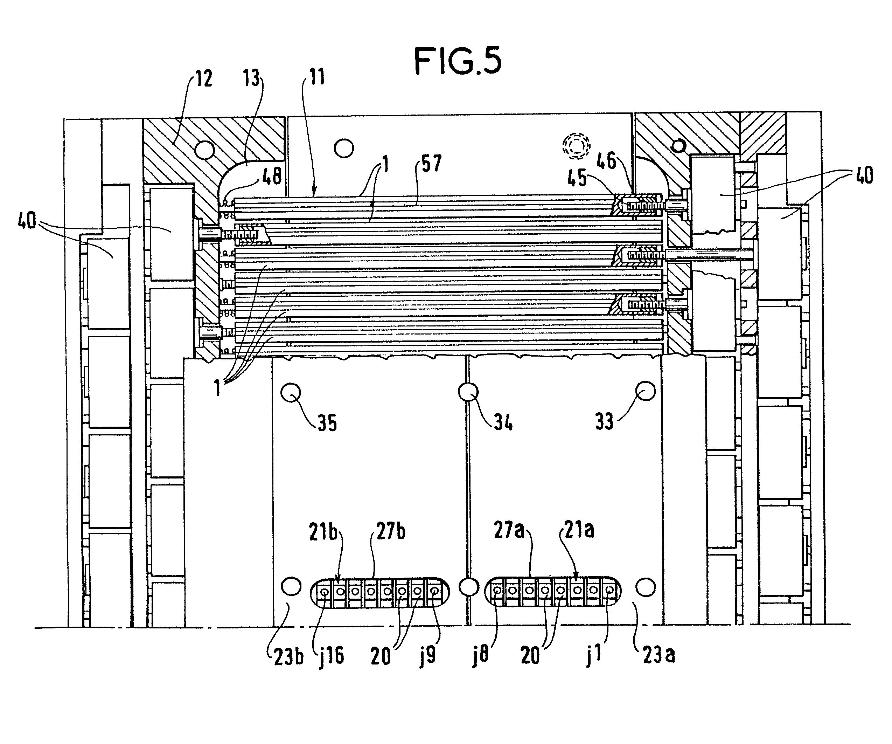

Dans les figures 4 et 5, on a représenté un mode de réalisation concrète du diffuseur optique schématisé dans la figure 3. On y a repéré par les mêmes références les éléments correspondants.

L'empilement des 16 plaquettes de distribution de programme 20, formant l'ensemble de distribution optique 21 est effectué en constituant deux sous-ensembles 21a et 21b identiques, de 8 plaquettes chacun, qui dans l'ensemble 21 sont séparés par une entretoise centrale 22. Chaque sous-ensemble 21a, 21b est constitué entre deux grilles de positionnement des plaquettes 20, les grilles 23a et 24a, pour le sous-ensemble 21a, et 23b et 24b pour le sous-ensemble 21b. Ces grilles 23a, 24a et 23b, 24b présentent des nervures 25 et 26 entre lesquelles viennent se loger les bords opposés des différentes plaquettes 20, sur lesquels débouchent les accès de leurs guides internes, non illustrés dans ces représentations.

Les nervures 25, entre lesquelles sont reçus les bords des plaquettes 20 qui portent, les premiers accès de leurs guides à coupler aux fibres de programmes, sont de section rectangulaire. La grille 23a, 23b correspondante présente une fenêtre 27a, 27b (figure 5) dans laquelle débouchent les 8 accès communs de couplage, notés j1 à j8 et j9 à j16 pour l'un et l'autre des sous-ensembles 21a, 21b, entre les guides individuels des différentes plaquettes 20 et les accès des 8 différentes fibres de programme affectées au sous-ensemble considéré. Ces grilles 23a et 23b portent également des languettes élastiques 29, par exemple en caoutchouc, qui tapissent le fond des rainures délimitées par leurs nervures 25, pour un positionnement sans jeu des plaquettes 20 dans le diffuseur optique final constitué.

Les nervures 26, recevant le bord des plaquettes 20 qui porte les seconds accès de leurs guides à coupler aux secondes extrémités des guides g de l'un des commutateurs 1, ont chacune un côté biseauté pour un positionnement très précis de ce bord des plaquettes et des seconds accès de leurs guides dans le sous-ensemble constitué.

Ces deux sous-ensembles 21a et 21b sont assemblés sur l'entretoise centrale 22 et sur deux flasques latéraux 31 et 32 au moyen de vis telles que 33, 34 et 35.

Pour la constitution de l'ensemble de sélection optique 11, les commutateurs 1 comportent chacun une armature périphérique 8, par exemple en alliage à base d'aluminium. Cette armature 8 sera rapportée et fixée par exemple par collage sur l'ensemble optique réalisé en structure intégrée ou sera utilisée pour un prépositionnement des extrémités des fibres individuelles avant moulage ou surmoulage.

L'ensemble de sélection optique 11 est formé sur un berceau de maintien 12 présentant une rainure 13 recevant l'empilement des 32 commutateurs, tout en laissant un jeu entre ces commutateurs et les bords latéraux de cette rainure 13. Ce berceau 12 présente, une autre rainure 14, ouverte sur le fond de la rainure précédente 13, recevant une plaque 15 de maintien de porte-fibres 16 pour les fibres d'abonnés fa. Ces porte-fibres 16 sont fixés par des couples de vis 17 sur la plaque 15 tandis que cette dernière est fixée par des couples de vis 18 sur le berceau 12 en assurant le positionnement précis de chaque fibre d'abonné devant les premières extrémités des guides g du commutateur auquel elle est affectée.

Le berceau 12 et des supports latéraux 41 et 42 qui lui sont associés portent des moteurs individuels 40 pour les différents commutateurs 1. Ces moteurs 40 sont montés alternativement d'un côté et de l'autre de l'ensemble 11 des commutateurs et sont, sur un même côté de cet ensemble, alternativement décalés pour des raisons d'encombrement; ils sont ainsi organisés en deux rangées sur chaque côté du berceau et sur le support latéral associé. Deux flasques latéraux terminaux 43 et 44 fixés sur les supports 41 et 42 contribuent au maintien des moteurs des rangées extérieures.

La commande de translation de chaque commutateur 1 à partir de son moteur individuel 40 est assurée par une vis sans fin 45 entraînée par le moteur. Cette vis 45 est engagée dans une bague taraudée 46 qui est montée latéralement dans le commutateur qu'elle actionne en translation et maintenue dans un logement cylindrique 47 formé sur l'armature périphérique de ce commutateur, pour le débattement longitudinal de la vis 45 alors qu'elle est entrainée en rotation.

Des ressorts 48, travaillant en extension, sont individuellement associés aux commutateurs 1, pour une commande précise du déplacement de chacun d'eux à partir de leur moteur et de leur vis sans fin d'actionnement. Chacun des ces ressorts 48 est monté, à l'opposé du moteur d'entraînement auquel il est associé, contre l'un des bords latéraux de la rainure 13 dans le berceau 12, où il est logé partiellement dans une cage de maintien 49 qui y est formée, et contre le bord en regard de l'armature 8 de ce commutateur concerné 1; il assure un rattrapage du jeu éventuel de la vis sans fin 45 lors d'un déplacement du commutateur.

L'ensemble de distribution optique résultant 21 et l'ensemble de sélection optique résultant 11 auquel est solidarisé l'ensemble de maintien des fibres d'abonnés sont assemblés orthogonalement l'un à l'autre sur une plaque intercalaire 50 munie d'une fenêtre centrale 51 dans laquelle les couplages entre leurs guides seront effectués. Des vis 52 assurent le maintien de l'ensemble de distribution 21 sur cette plaque intercalaire 50, d'autre vis 53 assurent le maintien de l'ensemble de sélection 11 sur cette plaque intercalaire. Le diffuseur optique résultant est, en outre, équipé de vis de réglage final telles que 36 agissant sur les bords des plaquettes de distribution 20 exempts d'accès de guides, pour leur positionnement final précis en regard des commutateurs individuels.

Des jeux de billes de guidage 55 assurent les guidages individuels des commutateurs 1 de l'ensemble de sélection 11 relativement à l'ensemble de distribution 21. D'autres jeux de billes 56 assurent de manière analogue les guidages individuels des commutateurs 1 de l'ensemble de sélection 11 relativement à la plaque de maintien 15 des porte-fibres 16 des fibres d'abonnés fa.

Les jeux de billes 56 et les jeux de billes 55 sont montés identiquement entre les éléments qu'ils guident relativement. A chaque commutateur, sont affectés un jeu de trois billes 55 et un autre jeu de deux billes 56. Ainsi que visible dans la figure 4 pour les billes affectées au commutateur 1 illustré, deux des trois billes 55 sont montées de part et d'autre des seconds accès des guides du commutateur. Chacune de ces deux billes 55 est partiellement logée dans une rainure qui lui correspond, de la pièce intercalaire 50 et vient, pour la partie restante, se loger dans une rainure formée dans le commutateur, ces rainures étant de longueur au moins égale à la moitié de l'amplitude maximale du déplacement du commutateur en regard de l'ensemble de distribution 21. La troisième bille 55 est montée de manière analogue entre l'entretoise centrale 22 de l'ensemble de distribution 21 et la partie centrale du commutateur 1, ce commutateur ayant ses guides divisés en deux parties décalées l'une de l'autre pour tenir compte de l'entretoise 22 dans l'ensemble de distribution 21.

Les deux billes 56 seront également montées de manière analogue, de part et d'autre des premiers accès des guides du commutateur et de part et d'autre des porte-fibres 16 sur la plaque de maintien 15.

Les rainures formées dans le commutateur 1 pour le guidage des billes 55 pourront, ainsi qu'illustré, constituer une seule et même rainure, référencée 57, courant sur toute la longueur du commutateur en étant décalée par rapport à la ligne des seconds accès des guides de celui-ci.

Dans la figure 4, pour une description complète du diffuseur optique, on a en outre illustré un coupleur optique 60 monté sur la fibre d'abonné fa illustrée. Ce coupleur optique 60, de type en tant que tel connu, assure la transmission vers l'abonné du programme sélectionné mais assure également la transmission de la commande de sélection de programme issue de l'abonné; il comportera, par exemple, un miroir semi-transparent monté entre une lentille de focalisation et une lentille de collimation. Cette commande de sélection de programme provenant de l'abonné est transmise depuis le coupleur 60 sur une liaison 61 et, après détection dans un circuit de commande du moteur 40 concerné, non illustré, est appliquée à ce moteur. On a également schématisé par des liaisons 62 les fils d'alimentation individuelle des moteurs 40.

On notera que pour éviter tout risque de positionnement incorrect des commutateurs en réponse aux commandes de sélection de programme issues des différents abonnés, on pourra prévoir des moyens (non représentés) de repérage de la position de chacun des commutateurs fournissant, pour chacun d'eux, un code binaire représentatif de la position de ce commutateur permettant, par comparaison avec la commande de sélection de programme issue de l'abonné correspondant, de commander l'entraînement du commutateur jusqu'à ce qu'il occupe la position qui assure la sélection du programme souhaité par l'abonné.

De tels moyens de repérage pourront comporter, par exemple, des plaquettes, au nombre de 5 pour $2^4 \leqslant P = 16 \leqslant 2^5$, identiques aux plaquettes de distribution 20 et incorporées à celles-ci dans l'ensemble de distribution 21, ces plaquettes additionnelles étant alimentées par un signal lumineux continu, des guides d'onde additionnels dans chaque commutateur 1, ici au nombre de 33 pour chaque commutateur, et des photodiodes associées à chaque commutateur, en nombre égal à celui des plaquettes additionnelles pour chacun d'eux.

Les 5 plaquettes additionnelles de l'ensemble de distribution seront ajoutées à une extrémité de l'empilement des 16 plaquettes de distribution 20 et auront chacune les premiers accès de leurs 32 guides d'onde couplés en commun à l'accès d'un élément optique, fibre ou source, pour recevoir de celui-ci un signal lumineux continu tandis que les seconds accès de leurs 32 guides, ou accès de sortie additionnels, définissent 32 rangées de 5 accès disposés au pas régulier r.

Les 33 guides d'onde additionnels de chaque commutateur seront disposés à une extrémité de ce commutateur prévu de longueur suffisante pour l'incorporation de ces 33 guides d'onde additionnels dont des extrémités seront affectées au couplage avec les 5 accès de sortie additionnels de l'une des 32 rangées et dont les autres extrémités, débouchant par exemple sur le bord du commutateur qui fait face à la fibre d'abonné correspondante, seront affectées au couplage avec les 5 photodiodes associées à ce commutateur. Celles-ci seront alors alignées face à ce bord, en regard des 5 accès de sortie additionnels, respectivement. Elles seront par ailleurs reliées au circuit de commande d'entraînement du commutateur considéré.

Les 33 guides d'onde additionnels de chaque commutateur seront disposés de manière à permettre de recueillir, pour chacune des 16 positions différentes du commutateur pour lesquelles s'effectue un couplage entre l'accès de la fibre d'abonné concernée et l'accès de l'une des fibres de programme, un code différent, à 5 bits, en sortie des photodiodes associées à ce commutateur.

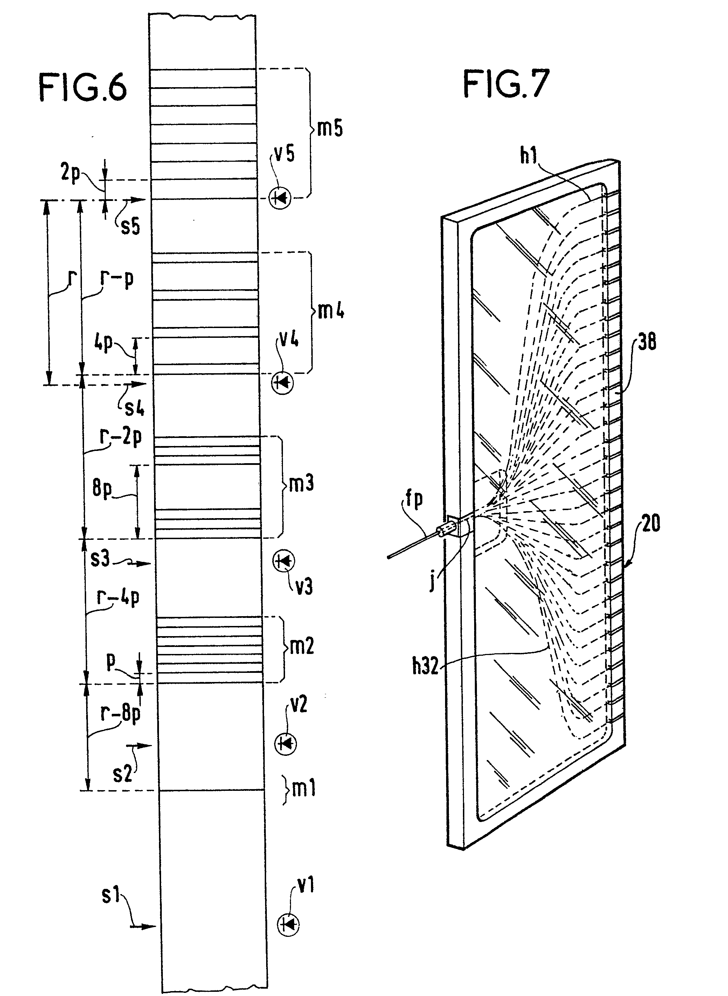

Dans la figure 6, on a schématisé un agencement de ces guides d'onde additionnels formés dans le commutateur relativement aux accès de sortie additionnels repérés par s1 à s5 et aux photodiodes repérées par v1 à v5. Ces guides d'onde additionnels forment 5 groupes successifs m1 à m5 comportant, en ce qui concerne un premier groupe m1, un guide d'onde unique et, en ce qui concerne les quatre suivants m2 à m5, 8 guides d'onde chacun, les guides d'onde d'un même groupe étant destinés à être en regard d'un même accès de sortie additionel pour différentes positions du commutateur parmi les 16 positions de couplage de celui-ci, les 5 groupes de guides d'onde additionels correspondant donc aux 5 accès de sortie additionnels respectivement. Dans le deuxième groupe m2 de guides d'onde additionnels, c'est-à-dire celui suivant immédiatement le premier groupe m1, les guides seront disposés au pas p d'entraînement du commutateur, le premier guide de ce deuxième groupe étant distant de (r–8 p) du guide unique du premier. Dans le troisième groupe de guides d'onde additionnels m3, ceux-ci formeront 2 paquets de 4 guides disposés au pas p, les premiers guides des deux paquets étant distants l'un de l'autre de 8 p et le premier guide de ce troisième groupe étant distant de (r–4 p) du premier guide du deuxième groupe. Dans le quatrième groupe de guides d'onde additionnels m4, ceux-ci formeront 4 paquets de 2 guides distants de p, les premiers guides de deux paquets successifs étant distants l'un de l'autre de 4 p et le premier guide de ce quatrième groupe étant distant de (r–2 p) du premier guide du troisième groupe. Dans le cinquième groupe guides d'onde additionnels m5, ceux-ci seront disposés régulièrement au double du pas p, le premier guide de ce cinquième groupe étant distant de (r–p) du premier guide du quatrième groupe.

On notera que les pas r et p sont choisis de telle sorte que le premier soit supérieur à (P–1) fois le second, soit ici r supérieur à 15 fois p.

Dans la figure 7, on a illustré un exemple de réalisation d'une plaquette 20 de distribution de l'un des programmes, conforme à celles rentrant dans les figures 3, 4 et 5. Cette plaquette 20 comporte les 32 guides individuels h1 à h32 (N=32), indiqués au regard de la figure 3, et un guide commun j dont l'un des deux accès débouche sur un bord de la plaquette 20 et constitue l'accès de couplage commun des 32 guides h de cette plaque 20 à l'accès de sa fibre de programme, visible sous l'une des références j1 à j16 dans la figure 5. Le guide commun j, de section plus importante que les guides individuels h, a son deuxième accès couplé en commun directement aux premières extrémités des 32 guides individuels h. Les secondes extrémités de ces guides individuels s'étendent au pas t précité le long d'une ligne sur le bord de la plaquette 20 opposé à l'accès terminal du guide j.

Cette plaquette de distribution 20 comporte, comme les commutateurs 1, une armature périphérique 38, par exemple en alliage métallique à base d'aluminium.

Les plaquettes de distribution 20 pourront être comme les commutateurs 1, réalisées en structure intégrée, l'armature périphérique étant alors rapportée et collée sur la plaque de verre comportant les guides d'onde h qui y sont créés. Comme les commutateurs 1 également, les plaquettes 20 pourront être aussi, ainsi qu'illustré, obtenues par moulage dans du verre ou surmoulage dans une résine époxy chargée en silice de fibres individuelles h et j dont les extrémités sont prépositionnées et collées sur un cadre qui constituera l'armature 38 finale précitée. Dans ce dernier mode d'obtention, les extrémités des guides h couplées directement en commun à l'extrémité du guide j seront rassemblées, ainsi qu'il est connu, en un réseau hexagonal compact à plusieurs couches tandis que les autres extrémités des guides h et l'autre extrémité du guide j portées par l'armature et enrobées de colle et du produit de moulage ou de surmoulage seront rectifiées par polissage des bords de l'armature qui les portent.

**Revendications**

1. Ensemble de commutation optique spatiale entre accès d'un premier groupe (GN) de premiers éléments optiques (fa) et accès d'un second groupe (GP) de seconds éléments optiques (fp) comportant entre ces accès deux empilements (11, 21) orthogonaux de plaquettes optiques (1, 20), dans lesquels chacune des plaquettes est affectée à l'un des premiers ou seconds éléments optiques selon l'empilement auquel appartient cette plaquette et incorpore une pluralité de guides optiques (g, h) s'épanouissant depuis leurs extrémités, dites premières extrémités, destinées aux liaisons avec l'accès de l'élément optique affecté à la plaquette concernée, jusqu'à leurs secondes extrémités, et dans lesquels les secondes extrémités des guides sont agencées en rangées pour l'un des empilements (21) et en colonnes pour l'autre des empilements (11) pour permettre, par des translations relatives de plaquettes dans leur empilement, des couplages sélectifs entre lesdits éléments optiques (g, h), l'ensemble étant caractérisé en ce que, dans l'un desdits empilements (21), dit de distribution optique, les premières extrémités des guides (h) de chacune de ses plaquettes sont couplées en commun à l'accès de l'élément optique (fp), dil second élément optique, qui est affecté à la plaquette considérée, pour que chacune des plaquettes de distribution assure une fonction de diffusion entre l'accès de ce second élément optique (fp) et les secondes extrémités de ses guides (h) alors que chacune des plaquettes (1) appelées commutateurs de l'autre empilement (11), dit de sélection optique, assure une fonction de commutation entre l'accès du premier élément optique (fa) affecté à ce commutateur et les secondes extrémités de ses guides (g), et en ce qu'il comporte des moyens d'entraînement (4) couplés individuellement aux seuls commutateurs (1), pour assurer l'entraînement individuel de chaque commutateur par rapport à l'accès du premier élément optique (fa) auquel le commutateur est affecté, pour l'obtention de ses différentes positions possibles devant l'accès de ce premier élément optique pour chacune desquelles le premier élément optique considéré (fa) est couplé sélectivement à l'un des seconds éléments optiques (fp) à travers un seul des guides de ce commutateur et un seul des guides de la plaquette de distribution affectée au second élément optique considéré.

2. Ensemble de commutation optique spatiale selon la revendication 1, caractérisé en ce qu'il comporte:
   – des premiers moyens mécaniques de maintien et positionnement desdites plaquettes de distribution (20) dans leur empilement, comportant au moins une paire de grilles (23a, 24a; 23b, 24b) à nervures (25, 26) et des flasques latéraux (31, 32),
   – des seconds moyens mécaniques de maintien et positionnement desdits premiers éléments optiques (fa), comportant une plaque de maintien (15) sur laquelle sont montés des supports individuels (16) pour ces premiers éléments optiques (fa),
   – des troisièmes moyens mécaniques de maintien et positionnement desdits commutateurs (1) dans leur empilement, comportant un berceau de maintien (12) présentant une première rainure centrale (13) recevant les commutateurs, tout en maintenant un jeu entre lesdits commutateurs (1) et les bords latéraux de ladite rainure, et une deuxième rainure (14), ouverte dans le fond de ladite première rainure, dans laquelle est montée fixe ladite plaque de maintien (15) des supports individuels (16) pour lesdits premiers éléments optiques (fa), et
   – des quatrièmes moyens de maintien relatif desdits empilements de distribution (21) et de sélection (11), comportant une plaque intercalaire (50) sur laquelle sont fixés relativement les premiers et troisièmes moyens mécaniques et présentant une fenêtre centrale (51) dans laquelle des couplages entre les guides individuels (h, g) desdits empilements sont assurés.

3. Ensemble de commutation optique spatiale selon la revendication 2, caractérisé par le fait que lesdits moyens d'entraînement desdits commutateurs individuels (1) sont montés latéralement dans ledit berceau de maintien (12).

4. Ensemble de commutation optique spatiale selon la revendication 3, caractérisé par le fait que lesdits moyens d'entraînement comportent, pour chaque commutateur (1), un moteur (40) d'actionnement d'une vis sans fin (45) engagée latéralement dans le commutateur concerné, et un ressort de rattrapage de jeu (48) monté latéralement entre ledit commutateur (1) et le berceau de maintien (12), à l'opposé de la vis sans fin (45).

5. Ensemble de commutation optique spatiale selon l'une des revendications 2 à 4, caractérisé par le fait qu'il comporte un premier jeu de billes de guidage (55) montées entre ladite plaque intercalaire (50) et chacun desdits commutateurs et un second jeu de billes de guidage (56) montées entre la plaque de maintien (15) des supports individuels (16) pour lesdits premiers éléments optiques (fa) et chacun des commutateurs (1), chacune des billes étant logées partiellement dans des rainures formées dans les éléments guidés relativement, ces rainures étant de longueur au moins égale à la moitié de l'amplitude maximale de déplacement de chaque commutateur.

6. Ensemble de commutation optique spatiale selon l'une des revendications 1 à 5, caractérisé par le fait que chaque commutateur (1) comporte une armature périphérique (8).

7. Ensemble de commutation optique spatiale selon l'une des revendications 1 à 6, caractérisé par le fait que chaque commutateur (1) est formé par une plaque mince transparente dans laquelle lesdits guides d'onde (g) sont créés par diffusion d'ions.

8. Ensemble de commutation optique spatiale selon l'une des revendications 1 à 6, caractérisé par le fait que chaque commutateur (1) est constitué par un bloc rigide à base de verre dans lequel sont noyés lesdits guides d'onde individuels (g) et dont les bords, portant lesdites extrémités des guides, sont polis et rectifiés.

9. Ensemble de commutation spatiale selon l'une des revendications 1 à 8, caractérisé par le fait que chacune des plaquettes de distribution (20) incorpore en outre un guide d'onde supplémentaire (j) dit guide commun, assurant le couplage entre l'accès du second élément optique (fp) affecté à la plaquette considérée et ses guides d'onde individuels (h).

10. Ensemble de commutation optique spatiale selon la revendication 9, caractérisé par le fait que chacune des plaquettes de distribution (20) comporte une armature périphérique (38).

11. Ensemble de commutation optique spatiale selon l'une des revendications 9 et 10, caractérisé par le fait que chaque plaquette de distribution (20) est en une résine époxy chargée en silice dans laquelle ses guides d'onde (h) et son guide commun (j) sont noyés, lesdits guides d'onde (h) étant rassemblés en un réseau hexagonal en regard de ce guide commun (j).

12. Ensemble de commutation optique spatiale selon l'une des revendications 9 et 10, caractérisé par le fait que chaque plaquette de distribution (20) est en verre dans lequel sont noyés ses guides d'onde (h) et le guide commun (j), lesdits guides d'onde étant rassemblés en un réseau hexagonal face à ce guide commun.

13. Ensemble de commutation optique spatiale selon l'une des revendications 9 et 10, caractérisé par le fait que chaque plaquette de distribution (20) est formée par une plaque de verre dans laquelle sont créés par diffusion d'ions ses guides d'onde (h) et le guide commun (j) qui leur est couplé.

**Patentansprüche**

1. Optische Einheit zur räumlichen Durchschaltung zwischen Anschlüssen einer ersten Gruppe (GN) erster optischer Elemente (fa) und Anschlüssen einer zweiten Gruppe (GP) zweiter optischer Elemente (fp), mit zwei zueinander senkrechten Stapeln (11, 21) optischer Platten (1, 20) zwischen diesen Anschlüssen, wobei jede der Platten einem ersten oder zweiten optischen Element gemäss dem Stapel, dem die betreffende Platte angehört, zugeordnet ist, und eine Vielzahl von Lichtleitern (g, h) umfasst, die sich von einem ihrer Enden, ersten Enden genannt, aus auffächern, wo sie zur Verbindung mit den Anschlüssen des zugeordneten optischen Elements an die betreffende Platte bestimmt sind, bis zu ihren zweiten Enden, wobei diese zweiten Enden der Lichtleiter in Zeilen, was den einen Stapel (21) angeht, und in Spalten angeordnet sind, was den anderen Stapel (11) angeht, um durch relative Verschiebungen der Platten in ihrem Stapel die selektiven Kopplungen zwischen den optischen Elementen (g, h) zu erlauben, dadurch gekennzeichnet, dass in einem der Stapel (21), optischer Verteilstapel genannt, die ersten Enden der Lichtleiter (h) jeder seiner Platten gemeinsam an den Anschluss des optischen Elements (fp), zweites optisches Element genannt, gekoppelt sind, das der betreffenden Platte zugeordnet ist, so dass jede der Verteilplatten eine Verteilfunktion zwischen dem Anschluss dieses zweiten optischen Elements (fp) und den zweiten Enden dieser Lichtleiter (h) bewirkt, während jede der Platten (1), Schalter genannt, des anderen Stapels (11), optischer Auswahlstapel genannt, eine Schaltfunktion zwischen dem Anschluss des ersten optischen Elements (fa), der diesem Schalter zugeordnet ist, und den zweiten Enden seiner Lichtleiter (g) sichert, und dass Antriebsmittel (4) vorgesehen sind, die einzeln nur mit den Schaltern (1) gekoppelt sind, um den individuellen Antrieb jedes Schalters bezüglich des Anschlusses des ersten optischen Elements (fa) zu bewirken, dem der Schalter zugeordnet ist, um seine verschiedenen möglichen Stellungen vor dem Anschluss dieses ersten optischen Elements zu erzielen, wobei in jeder dieser Stellungen das erste betrachtete optische Element (fa) selektiv an eines der zweiten optischen Elemente (fp) über einen einzigen Lichtleiter dieses Schalters und einen einzigen Lichtleiter der dem betreffenden zweiten optischen Element zugeordneten Verteilplatte gekoppelt ist.

2. Optische räumliche Schalteinheit nach Anspruch 1, dadurch gekennzeichnet, dass sie aufweist:
- erste mechanische Mittel zum Halten und Positionieren der Verteilplatten (20) in ihrem Stapel, mit mindestens zwei mit Rippen (25, 26) versehenen Gittern (23a, 24a; 23b, 24b) und mit seitlichen Flanschen (31, 32),
- zweite mechanische Mittel zum Halten und Positionieren der ersten optischen Elemente (fa), mit einer Halteplatte (15), auf der individuelle Halter (16) für diese ersten optischen Elemente (fa) montiert sind,

– dritte mechanische Mittel zum Halten und Positionieren der Schalter (1) in ihrem Stapel, mit einem Halteblock (12), der eine erste, die Schalter (1) aufnehmende zentrale Rinne (13) besitzt, wobei zwischen den Schaltern (1) und den seitlichen Rändern der Rinne ein Spiel verbleibt, und eine zweite am Grund der ersten Rinne offene Rinne (14) besitzt, in der die Platte (15) zum Halten der individuellen Träger(16) für die ersten optischen Elemente (fa) fest montiert ist,

– und vierte Mittel zum relativen Halten der Verteil- (21) und Auswahlstapel (11), mit einer Zwischenplatte (50), auf der die ersten und dritten mechanischen Mittel relativ zueinander befestigt sind und die ein zentrales Fenster (51) aufweist, in dem die Kopplungen zwischen den individuellen Lichtleitern (h, g) der Stapel sichergestellt werden.

3. Optische räumliche Schalteinheit nach Anspruch 2, dadurch gekennzeichnet, dass die Mittel zum Antrieb der individuellen Schalter (1) seitlich im Halteblock (12) montiert sind.

4. Optische räumliche Schalteinheit nach Anspruch 3, dadurch gekennzeichnet, dass die Antriebsmittel für jeden Schalter (1) einen Motor (40) zum Antrieb einer Endlosschraube (45), die seitlich im betrachteten Schalter eingesetzt ist, und eine Feder (48) aufweisen, mit der das Spiel aufgefangen wird und die seitlich zwischen dem Schalter (1) und dem Halteblock (12) entgegengesetzt zu der Endlosschraube (45) montiert ist.

5. Optische räumliche Schalteinheit nach einem der Ansprüche 2 bis 4, dadurch gekennzeichnet, dass sie einen ersten Satz von Führungskugeln (55), die zwischen der Zwischenplatte (50) und jedem der Schalter montiert sind, und einen zweiten Satz von Führungskugeln (56) aufweist, die zwischen der Halteplatte (15) der individuellen Träger (16) für die ersten optischen Elemente (fa) und jeden der Schalter (1) montiert sind, wobei jede der Kugeln teilweise in Rinnen sitzt, die in den relativ zueinander geführten Elementen ausgebildet sind und deren Länge mindestens gleich der Hälfte der Maximalamplitude der Verschiebung jedes Schalters ist.

6. Optische räumliche Schalteinheit nach einem der Ansprüche 1 bis 5, dadurch gekennzeichnet, dass jeder Schalter (1) eine Randarmatur (8) aufweist.

7. Optische räumliche Schalteinheit nach einem der Ansprüche 1 bis 6, dadurch gekennzeichnet, dass jeder Schalter (1) von einer dünnen transparenten Platte gebildet wird, in der die Lichtleiter (g) durch Ionendiffusion hergestellt sind.

8. Optische räumliche Schalteinheit nach einem der Ansprüche 1 bis 6, dadurch gekennzeichnet, dass jeder Schalter (1) von einem starren Block auf Glasbasis gebildet wird, in dem die individuellen Lichtleiter (g) eingebettet sind und dessen Ränder, die die Enden der Lichtleiter tragen, poliert und gerichtet sind.

9. Räumliche Schalteinheit nach einem der Ansprüche 1 bis 8, dadurch gekennzeichnet, dass jede der Verteilplatten (20) ausserdem einen zusätzlichen Lichtleiter (j) enthält, gemeinsamer Lichtleiter genannt, der die Kopplung zwischen dem Anschluss des zweiten optischen Elements (fp), das der betreffenden Platte zugeordnet ist, und seinen individuellen Lichtleitern (h) bewirkt.

10. Optische räumliche Schalteinheit nach Anspruch 9, dadurch gekennzeichnet, dass jede der Verteilplatten (20) eine Randarmatur (38) aufweist.

11. Optische räumliche Schalteinheit nach einem der Ansprüche 9 und 10, dadurch gekennzeichnet, dass jede Verteilplatte (20) aus einem mit Siliciumoxid angereicherten Epoxyharz besteht, in das ihre Lichtleiter (h) und ihr gemeinsamer Lichtleiter (j) eingebettet sind, wobei die Lichtleiter (h) in einem sechseckigen Netz gegenüber dem gemeinsamen Lichtleiter (j) zusammengefasst sind.

12. Optische räumliche Schalteinheit nach einem der Ansprüche 9 und 10, dadurch gekennzeichnet, dass jede Verteilplatte (20) aus einem Glas ist, in das ihre Lichtleiter (h) und ihr gemeinsamer Lichtleiter (j) eingebettet sind, wobei diese Lichtleiter in einem rechteckigen Netz gegenüber dem gemeinsamen Lichtleiter angeordnet sind.

13. Optische räumliche Schalteinheit nach einem der Ansprüche 9 und 10, dadurch gekennzeichnet, dass jede Verteilplatte (20) von einer Glasplatte gebildet wird, in der ihre Lichtleiter (h) und der mit ihnen gekoppelte gemeinsame Lichtleiter (j) durch Ionendiffusion ausgebildet sind.

**Claims**

1. A space division optical switching assembly located between accesses of a first group (GN) of first optical elements (fa) and accesses of a second group (GP) of second optical elements (fp), comprising between these accesses two orthogonal stacks (11, 21) of optical plates (1, 20) in which each one of the plates is allocated to one of the first or second optical elements according to the stack to which the plate belongs, each plate incorporating a plurality of optical guides (g, h) which fan out from their first ends conceived to be connected to the accesses of the optical element associated to the respective plate, the second ends of the optical guides being arranged in rows as far as one of the stacks (21) is concerned, and in columns as far as the other stack (11) is concerned, to allow selective couplings between said optical elements (g, h) due to relative translations of plates in their stack, characterized in that the first ends of the guides (h) of each one of the plates in one of the stacks (21), called optical distribution stack, are coupled in common to the access of the optical element (fp), called second optical element, which is associated to the respective plate, such that each one of the distribution plates ensures a diffusion function between the access of the second optical element (fp) and the second ends of these guides (h), while each one of the plates (1), called switches, of the other stack (11), called optical selection stack, ensures a switch function between the access of the first optical element (fa) associated to this switch and the second ends of these guides (g), and that the assembly comprises drive means (4) individually coupled only to the switches (1) for ensuring the individual driving of each switch with respect to the access of the first optical element (fa) to which the switch is associated, in order to obtain its different possible positions in front of the access of this first optical element, the corresponding first optical element (fa) being selectively coupled, for each one of these positions, to one of the second optical elements (fp) via a unique one of the guides of this switch and a unique one of the guides of the distribution plate associated to the respective second optical element.

2. A space division optical switching assembly according to claim 1, characterized in that it comprises:
– first mechanical means for holding and positioning said distribution plates (20) in their stack, comprising at least one pair of grids (23a, 24a; 23b, 24b) with ribs (25, 26) and lateral flanges (31, 32),
– second mechanical means for holding and positioning said first optical elements (fa), comprising a holding plate (15) on which are mounted individual supports (16) for supporting these first optical elements (fa),
– third mechanical means for holding and positioning said switches (1) in their stack, comprising a holding block (12) presenting a first central groove (13) accommodating the switches, a clearance remaining between said switches (1) and the lateral edges of said groove, and a second groove (14) opening in the bottom of the first groove in which is fixed said plate (15) for holding the individual supports (16) for said first optical elements (fa),
– and fourth means for holding said distribution stack (12) and said selection stack (11) relative to one another, comprising an intermediate plate (50) on which the first and third mechanical means are fixed relative to one another and which has a central window (51) in which the couplings between the individual guides (h, g) of said stacks are ensured.

3. A space division optical switch assembly according to claim 2, characterized in that said means for driving said individual switches (1) are laterally mounted in said holding block (12).

4. A space division optical switch assembly according to claim 3, characterized in that said driving means comprise for each switch (1) a motor (40) for driving an endless screw (45) which is engaged laterally in the respective switch, and a clearance compensator spring (48) mounted laterally between said switch (1) and the holding block (12) opposite the endless screw (45).

5. A space division optical switch assembly according to one of claims 2 to 4, characterized in that it comprises a first set of guide balls (55) mounted between said intermediate plate (50) and each one of said switches, and a second set of guide balls (56) mounted between the plate (15) for holding the individual supports (16) for said first optical element (fa) and each one of the switches (1), each ball being partially accommodated in the grooves formed in the elements which are guided relative to one another, these grooves having a length which is at least equal to one half of the maximum amplitude of displacement of each switch.

6. A space division optical switch assembly according to one of claims 1 to 5, characterized in that each switch (1) comprises a peripheral armature (8).

7. A space division optical switch assembly according to one of claims 1 to 6, characterized in that each switch (1) is formed by a thin transparent plate in which said waveguides (g) are created by ion diffusion.

8. A space division optical switch assembly according to one of claims 1 to 6, characterized in that each switch (1) is constituted by a rigid block on a glass basis in which said individual waveguides (g) are embedded and the edges of which bearing said ends of the guides are polished and rectified.

9. A spatial switch assembly according to on of claims 1 to 8, characterized in that each one of the distribution plates (20) further incorporates an additional waveguide (j) called common guide providing the coupling between the access of the second optical element (fp) assigned to the respective plate and its individual waveguides (h).

10. A space division optical switch assembly according to claim 9, characterized in that each one of the distribution plates (20) comprises a peripheral armature (38).

11. A space division optical switch assembly according to one of claims 9 and 10, characterized in that each distribution plate (20) is made of an epoxy resin charged with silica wherein its waveguides (h) and its common guide (j) are embedded, said waveguides (h) being assembled in a hexagonal array facing this common guide (j).

12. A space division optical switch assembly according to one of claims 9 and 10, characterized in that each distribution plate (20) is made of glass in which its waveguides (h) and the common guide (j) are embedded, these waveguides being assembled in a hexagonal array facing this common guide.

13. A space division optical switch assembly according to one of claims 9 and 10, characterized in that each distribution plate (20) is formed by a glass plate in which its waveguides (h) and the common guide (j) which is coupled to them, are created by ion diffusion.

FIG.1

FIG.2

# FIG.3

FIG.4

FIG.5

# FIG.6

# FIG.7